# EUROPÄISCHE PATENTSCHRIFT

(11) **EP 4 471 358 B1**
(45) Veröffentlichungstag und Bekanntmachung des Hinweises auf die Patenterteilung: **03.09.2025**
(21) Anmeldenummer: 24206787.4
(22) Anmeldetag: 14.02.2022
(51) Int. Cl.: F24D 3/10, F24D 3/18, F24D 19/08, F24D 19/10, F24H 15/12, F24H 15/305, F24H 15/335, F25B 41/39, F25B 30/00, F25B 49/00

(54) **WÄRMEPUMPENANLAGE SOWIE VERFAHREN ZUM BETREIBEN EINER WÄRMEPUMPENANLAGE**
HEAT PUMP SYSTEM AND METHOD FOR OPERATING A HEAT PUMP SYSTEM
INSTALLATION DE POMPE À CHALEUR ET PROCÉDÉ DE FONCTIONNEMENT D'UNE INSTALLATION DE POMPE À CHALEUR

(30) Priorität: 23.02.2021 DE 102021201712
(43) Veröffentlichungstag der Anmeldung: 04.12.2024
(62) Teilanmeldung aus: 22156476.8
(73) Patentinhaber: Glen Dimplex Deutschland GmbH, 95326 Kulmbach (DE)
(72) Erfinder: HEYDRICH, Maik, 07907 Oettersdorf (DE); RAMMENSEE, Jens, 95030 Hof (DE); RÜHROLD, Ian, 95233 Helmbrechts (DE)
(74) Vertreter: FDST Patentanwälte

(56) Entgegenhaltungen:
- EP-A1- 3 358 273
- EP-A1- 3 734 198
- EP-A1- 3 767 186
- WO-A1-2017/199345
- JP-A- 2000 104 940
- US-A1- 2011 302 941

## Beschreibung

Die Erfindung betrifft eine Wärmepumpenanlage sowie ein Verfahren zum Betreiben einer solchen Wärmepumpenanlage.

Unter Wärmepumpenanlage wird vorliegend eine Anlage verstanden, welche zumindest eine Wärmepumpe sowie zumindest einen daran angeschlossenen Verbraucherkreis mit zumindest einem Verbraucher aufweist. Im Verbraucherkreis zirkuliert ein Wärme- und Kälteträger, nachfolgend kurz als Wärmeträgermedium bezeichnet. Allgemein dient die Anlage hierbei zum Bereitstellen von Wärme und/oder alternativ auch Kälte an dem zumindest einen Verbraucher.

Wärmepumpenanlagen zur Bereitung von Heizwasser oder Warmwasser sind häufig mit einem Warmwasserspeicher und einem Heizungspufferspeicher, nachfolgend kurz Pufferspeicher ausgerüstet. Der Pufferspeicher ist dabei Teil des Verbraucherkreises und zwischen der Wärmepumpe und dem zumindest einen Verbraucher zwischengeschaltet.

Allgemein entziehen Wärmepumpen Wärme aus den Wärmequellen Luft/Wasser/Erdboden oder sonstigen festen, flüssigen oder gasförmigen Medien. Wärmepumpen weisen generell einen Kältemittelkreislauf auf, welcher zumindest zwei auch als Wärmeübertrager bezeichnete Wärmetauscher aufweist, die im Betrieb als Verdampfer und/oder Kondensator arbeiten, sowie weiterhin einen Verdichter und ein Expansionsventil. Im Kreislauf wird ein Kältemittel geführt. Reversible Wärmepumpen bereiten im Kühlbetrieb Kaltwasser für Kühlungs- und Klimatisierungsaufgaben.

Wird als Kältemittel ein brennbares und/oder toxisches Kältemittel wie z.B. Propan eingesetzt, sind erhöhte Anforderungen bezüglich der Sicherheit an die Wärmepumpe und an die angeschlossenen Verbraucherkreisläufe zu stellen.

Aus der EP 3 734 198 A1 ist eine Wärmepumpenanlage zu entnehmen, bei der in einem Vorlauf eines an eine Wärmepumpe angeschlossenen Verbraucherkreises ein Kältemittelabscheider integriert ist. Bei diesem handelt sich um eine kleine Baueinheit, die unmittelbar in eine Rohrleitung eingebaut wird, durch die das Wärmeträgermedium im Verbraucherkreis strömt. Der Kältemittelabscheider weist dabei einen speziellen Aufbau mit einer Umlenkeinrichtung auf, sodass ein im Wärmeträgermedium enthaltenes gasförmiges Kältemittel von dem flüssigen Wärmeträgermedium abgeschieden werden kann. Über einen Entlüfter entweicht das Kältemittel.

Aus der DE 10 2018 113 332 A1 ist eine Wärmepumpe zu entnehmen, die in einem abgedichteten Gehäuse eingehaust ist. Um bei einer Leckage eine kritische Ansammlung von austretendem Kältemittel zu vermeiden, wird das Innere des Gehäuses mit Spülluft gespült.

Aus der DE 10 2018 127 205 A1 ist eine Wärmepumpe zu entnehmen, bei der in Abhängigkeit einer detektierten Leckage mit Hilfe von Ventilen das Kältemittel im Kondensator eingesperrt wird.

Standardmäßig sind Verbraucherkreisläufe sowohl mit Sicherheitseinrichtungen gegen unzulässige Drucküberschreitung im Kreislauf als auch mit Entlüfter ausgerüstet. Entlüfter haben die Aufgabe Luft (Gas) aus dem Kreislauf zu entfernen. Luft (Gas) wird beim Befüllen eines Verbraucherkreislaufes mit dem Wärmeträgermedium immer mit eingebracht. Luft führt zu einem schlechteren Wärmeübergang an den Heiz- und Kühlflächen, verursacht Strömungsgeräusche, reduziert die Pumpenleistung, reagiert mit wasserführenden Teilen und führt zu Korrosionsprozessen. Luft (Gas) liegt in zwei Zustandsformen vor: Gelöst im Wärmeträgermedium und in Form von freien Luftbläschen. Die freien Luftbläschen können sichtbar sein oder als unsichtbare Mikrobläschen auftreten. Je kleiner die Luft (Gas)-bläschen sind, desto mehr verbleiben Sie in der Strömung. Deshalb ist eine Entfernung von Mikrobläschen durch konventionelle Einrichtungen (z.B. automatische Entgasung) nicht möglich. Ein Teil der Luft (Gas) strömt daher in gelöster Form im Wärmeträgermedium als mikrofeine Blasen an konventionellen Entlüftern vorbei. Deshalb werden sogenannte Mikroblasenabscheider eingebaut. Der aus der oben genannten EP 3 734 198 A1 bekannte Kältemittelabscheider ist ein solcher Mikroblasenabscheider.

Mikroblasenabscheider weisen regelmäßig Einbauten auf, welche zum Zwecke der Abscheidung der Luft (Gas) die Strömung des Wärmeträgermediums beeinflussen, z.B. verwirbeln oder umlenken. Beispielsweise bestehen sie aus einer zweigeteilten Kammer. In der unteren befinden sich dabei Edelstahl- oder Kunststoffnetze, die das Wasser verwirbeln. Dabei lösen sich Mikroblasen ab. Sie verbinden sich an den eingebrachten Elementen zu größeren Luftblasen, die dann aufsteigen und über einen automatischen Entlüfter entweichen. Eine alternative Ausführungsvariante ist beispielsweise zu entnehmen aus der DE 90 01 647 U1

Aus der JP 2000 104940 A ist eine Wärmepumpenanlage zu entnehmen mit einer Wärmetauschereinheit, die über eine Hydraulikleitung mit einem Brauchwasserspeicher zur Erwärmung des Brauchwassers verbunden ist. An der Hydraulikleitung oder an einer Entnahmeleitung für Brauchwasser ist ein Gasventil mit Gassensor angeordnet.

Aus der EP 3 358 273 A1 ist eine Wärmepumpenanlage zu entnehmen, bei der die Anwesenheit von Kältemittel indirekt über eine Druckmessung im Wasserkreislauf erfasst wird.

Der Erfindung liegt die Aufgabe zugrunde, die technische Sicherheit einer Wärmepumpenanlage mit einer Wärmepumpe, welche mit einem potentiell gefährlichen Kältemittel, wie z.B. Propan betrieben wird, zu verbessern.

Die Aufgabe wird gelöst durch eine Wärmepumpenanlage mit den Merkmalen des Anspruchs 1.

Die Aufgabe wird weiterhin gelöst durch ein Verfahren gemäß Anspruch 12 zum Betrieb einer solchen Wärmepumpenanlage. Die im Hinblick auf die Wärmepumpenanlage nachfolgend angeführten Vorteile und bevorzugten Ausgestaltungen sind sinngemäß auch auf das Verfahren zu übertragen.

Als Kältemittel für die Wärmepumpe wird insbesondere ein potentiell sicherheitskritisches und/oder toxisches Kältemittel eingesetzt, welches beispielsweise brennbar ist und/oder bei einer entsprechenden Anreicherung in der Luft zu einem explosionsfähigen Gemisch führen kann. Speziell wird als Kältemittel Propan eingesetzt oder andere toxische Kohlenwasserstoffverbindungen, wie beispielsweise Butan, Isobutan oder auch Ammoniak.

In dem Verbraucherkreis strömt das in der Regel flüssige Wärmeträgermedium, wobei der Verbraucherkreis über eine Vorlaufleitung und eine Rücklaufleitung an der zumindest einen Wärmepumpe angeschlossen ist. Bei dem Verbraucherkreis handelt sich daher um ein geschlossenes System. Als Wärmeträgermedium wird typischerweise Wasser eingesetzt.

Im Falle einer Leckage, beispielsweise bei dem Wärmetauscher der Wärmepumpe, besteht die Gefahr, dass das Kältemittel in das Wärmeträgermedium übergeht und sich dann in Verbraucherkreis ansammelt und beispielsweise über regelmäßig eingebaute Entlüfter in die Umgebung entweicht. Um eine kritische Ansammlung innerhalb des Verbraucherkreises bzw. innerhalb eines Raumes in der Umgebung eines Entlüfters zu vermeiden, ist erfindungsgemäß der (Gas-) Sensor vorgesehen, mit dem ein im Verbraucherkreis enthaltenes gasförmiges Kältemittel erfasst und gemessen wird. Durch das aktive Messen und dem bedarfsweisen Einleiten der Sicherheitsmaßnahme wird daher verhindert, dass sich beim Betrieb der Wärmepumpenanlage beispielsweise in Betriebsräumen oder in sonstigen Räumen eine kritische Menge an Kältemittel anreichert, wenn also beispielsweise ein explosionsfähiges Gemisch erreicht wird. Dadurch ist ein sicherer Betrieb der Wärmepumpenanlage gewährleistet.

Der Schwellwert, bei dessen Überschreiten die Sicherheitsmaßnahme eingeleitet wird, wird dabei derart gewählt, dass eine kritische Anreicherung vermieden ist. Grundsätzlich kann der Schwellwert auf null gesetzt werden, so dass also die Sicherheitsmaßnahme ausgelöst wird, sobald vom Sensor Kältemittel gemessen wird. Vorzugsweise liegt der Schwellwert jedoch höher, so dass ein gewisser Anteil von Kältemittel im Wärmeträgermedium toleriert wird, bevor die Sicherheitsmaßnahme eingeleitet wird. Das Sensorsystem, also der Sensor insbesondere in Verbund mit der Steuereinrichtung, ist daher insbesondere zweistufig konzipiert. In der der ersten Stufe wird die Menge an Kältemittel gemessen und vorzugsweise angezeigt. In der zweiten Stufe wird nach Erreichen des Schwellwertes (welcher insbesondere zu einer potentiell kritischen Situation führt, z.B. Explosionsgefahr) wird die Sicherheitsmaßnahme eingeleitet.

Von besonderer Bedeutung ist hierbei, dass der Gassensor im Verbraucherkreis angeordnet ist. Hierunter wird verstanden, dass der Gassensor an einer (primären) Komponente des Verbraucherkreises angeschlossen ist, die selbst von dem Wärmeträgermedium durchströmt wird, oder zumindest an einer (sekundären) Komponente, speziell eine Rohrleitung wie z.B. eine Entlüftungsleitung, die mit einer (primären) Komponente in Strömungsverbindung steht. Bevorzugt detektiert der Gassensor allgemein ein im Wärmeträgermedium des Verbraucherkreises enthaltenes Kältemittel. Es wird daher direkt das Kältemittel im Wärmeträgermedium bzw. unmittelbar ein aus dem Wärmeträgermedium ausgasender Anteil detektiert und beispielsweise nicht erst eine Kältemittel- Konzentration in einem Raum, in den es beispielsweise über einen installierten Entlüfter entwichen ist. Der Schwellwert, ab dem die Sicherheitsmaßnahme eingeleitet wird, ist beispielsweise eine vorgegebene maximal zulässige Anreicherung (beispielsweise in ppm) des Kältemittels innerhalb eines Gasvolumens oder innerhalb eines am Gassensor vorbeiströmenden Gasstroms.

Bei der Sicherheitsmaßnahme handelt es sich im einfachsten Fall um eine Warnmeldung, sodass beispielsweise Betriebspersonal (manuell) eingreifen kann. Vorzugsweise wird jedoch automatisch und unmittelbar in den Betrieb der Wärmepumpenanlage eingegriffen, ohne dass eine manuelle Einflussnahme erforderlich ist.

Unter Verbraucher ist vorliegend allgemein ein von dem Wärmeträgermedium durchströmter Wärmetauscher zu verstehen, der die Wärme/Kälte des Wärmeträgermediums beispielsweis an einen Raum, beispielsweise ein Wohn- oder Büroraum abgibt. Speziell handelt es sich also bei dem Verbraucher um einen Heizkörper und bei dem Wärmeträgermedium bevorzugt um Heizwasser.

Typischerweise ist innerhalb des Verbraucherkreises eine Vielzahl derartiger Verbraucher angeordnet. Auch kann der Verbraucherkreis mehrere Teilkreise (Sekundärkreise) aufweisen, wobei in jedem Teilkreis ein oder mehrere Verbraucher angeordnet sein können. Die Verbraucher sind z.B. Heizkörper, Flächenheizungen oder Gebläsekonvektoren.

Weiterhin ist im Verbraucherkreis ein Pufferspeicher insbesondere als Heizungspuffer angeordnet, welcher zulaufseitig über eine Zuleitung mit der Wärmepumpe und ablaufseitig über eine Ableitung mit dem zumindest einen Verbraucher verbunden ist. D.h. das Wärmeträgermedium durchströmt den Pufferspeicher direkt und füllt also dessen Speichervolumen aus. Das Wärmeträgermedium wird beispielsweise nicht durch im Pufferspeicher enthaltene Wärmetauscher geführt. Der Pufferspeicher weist bevorzugt keine Wärmetauscher auf. Er wird typischerweise von oben nach unten von dem Wärmeträgerfluid durchströmt. Typischerweise sind auch keine Entnahmeleitung zur Entnahme von Warmwasser und eine Frischwasserzufuhr zum Ersetzen des entnommenen Wassers vorhanden, wie dies bei einem Brauchwasserspeicher der Fall ist.

Der Pufferspeicher ist bevorzugt in Reihe zwischen der Wärmepumpe und den Verbrauchern geschaltet und im Betrieb in der Regel vollständig oder nahezu vollständig mit dem Wärmeträgermedium gefüllt. Grundsätzlich besteht auch die Möglichkeit einer parallelen Anordnung (Parallelpufferspeicher). Ein derartiger Pufferspeicher ist grundsätzlich bekannt und wird zu unterschiedlichen Zwecken, beispielsweise zur Optimierung der Lauf- oder Betriebszeiten der Wärmepumpe, zur Überbrückung von Sperrzeiten oder auch bei einem sogenannten Lastmanagement eingesetzt. Derartige Pufferspeicher weisen allgemein ein Volumen auf, das vom Anwendungszweck und der Anlagenleistung abhängt. Regelmäßig liegt das Volumen jedoch zumindest bei 50 dm³, oder zumindest bei 100 dm³ oder auch bei zumindest mehreren 100 dm³ und teilweise auch über 1000 dm³. Typischerweise weist der Pufferspeicher ein Volumen beispielsweise im Bereich von 10-50 dm³/kW und insbesondere im Bereich von 20-40 dm³/kW der maximalen Heizleistung der Wärmepumpe (maximale Nennleistung der Wärmepumpe) auf. Bei dem Pufferspeicher handelt es sich regelmäßig um einen zylindrischen Behälter mit typischerweise kalottenförmigen Boden und Deckel. Innerhalb des Pufferspeichers sind typischerweise keine Einbauten zur Strömungslenkung des Wärmeträgermediums angeordnet, speziell keine Einbauten, welche beispielsweise zu einem Ausgasen von Gasanteilen führen, wie dies beispielsweise bei den Mikro-Gasabscheidern Fall ist.

Der Pufferspeicher ist weiterhin als ein Gasabscheider ausgebildet. Am Pufferspeicher ist hierzu eine Entlüftungsleitung angeschlossen, über die das abgeschiedene Gas und damit ggf. auch das gasförmige Kältemittel entweichen kann. Für die Funktion als Gasabscheider weist der Pufferspeicher bevorzugt keine Einbauten zur Strömungslenkung auf. Vielmehr wird die eigentliche Funktion des Pufferspeichers im Sinne eines großen Speichervolumens ausgenutzt, was dazu führt, dass das Wärmeträgermedium innerhalb des Pufferspeichers ausreichend lange verweilt, sodass im Wärmeträgermedium enthaltene Gasanteile ausgasen und sich in einem oberen Bereich des Pufferspeichers ansammeln bzw. den Pufferspeicher über die dort vorzugsweise angeschlossene Entlüftungsleitung entweichen können. Der Pufferspeicher ist daher im Betrieb typischerweise bis zu einer Füllstandshöhe mit dem Wärmeträgermedium gefüllt, wobei oberhalb der Füllstandshöhe in der Regel ein freier Gasraum ausgebildet ist. Für die Funktion als Gasabscheider ist wesentlich, dass das Wärmeträgerfluid frei durch den Pufferspeicher strömt, so dass enthaltene Gasanteile ausgasen und den Pufferspeicher verlassen können.

Der Pufferspeicher ist daher allgemein derart ausgebildet und insbesondere dimensioniert, dass im Betrieb im Wärmeträgermedium evtl. enthaltene Gasblasen nach oben aufsteigen können und sich im oberen Bereich des Pufferspeichers ansammeln und / oder über die Entlüftungsleitung den Pufferspeicher verlassen können. Hierzu ist das Volumen und die Geometrie insbesondere in Abhängigkeit eines zu erwartenden maximalen Volumenstroms des Wärmeträgermediums derart gewählt, dass die Strömungsgeschwindigkeit im Pufferspeicher ausreichend gering ist, so dass Gasblasen aufsteigen und zum obersten Punkt des Pufferspeichers und zur Entlüftungsleitung gelangen können.

Durch diese Maßnahme wird daher in einfacher Weise Kältemittel aus dem Verbraucherkreis entfernt. Eventuell in den Verbraucherkreis eintretendes Kältemittel wird abgeschieden und dabei detektiert. Der Übertritt in einen Sekundärkreis mit den Verbraucher und damit ins Gebäude wird so verhindert. Bei einer entsprechenden Ableitung, vorzugsweise ins Freie, wird also die Gefahr einer kritischen Anreicherung des Kältemittels zumindest reduziert.

Der besondere Vorteil der Verwendung des Pufferspeichers als Gasabscheider ist in seiner hohen Effizienz zu sehen. Über diesen können auch Gasanteile abgeschieden werden, die mit herkömmlichen Mikro-Gasabscheidern nicht abgeschieden werden, da diese regelmäßig keinen 100 % Abscheidegrad aufweisen.

In zweckdienlicher Ausgestaltung wird der Pufferspeicher im Betrieb von oben, also von der Zuleitung nach unten, also zur Ableitung hin von dem Wärmeträgermedium durchströmt. Die Zuleitung ist dabei in einem oberen Bereich und die Ableitung in einem unteren Bereich angeordnet. Typischerweise sind diese im obersten bzw. untersten Fünftel des Speichervolumens angeordnet.

Der Pufferspeicher ist nunmehr vorzugsweise derart dimensioniert, dass im Betrieb eine Strömungsgeschwindigkeit des Wärmeträgermediums einen vorgegebenen maximalen Grenzwert, der im Bereich von 0,1 m/s bis 0,3 m/s liegt, nicht überschreitet. Der Verbraucherkreis mit der Zuleitung und Ableitung zum / vom Pufferspeicher ist üblicherweise auf einen maximalen Volumenstrom des Wärmeträgermediums ausgelegt, welcher also beispielsweise bei einer maximalen Heizleistung maximal im Verbraucherkreis um-gewälzt wird. Bezogen auf diesen (maximalen) Volumenstrom wird die Geometrie, also das Volumen und die Querschnittsfläche (Durchmesser) des Pufferspeichers derart gewählt, dass die Strömungsgeschwindigkeit die angegebenen Werte nicht überschreitet. Hierdurch ist insgesamt eine vergleichsweise geringe Strömungsgeschwindigkeit sichergestellt. Der Durchmesser liegt dabei typischerweise bei größer 0,5 m und hängt von der Anlagengröße ab. Die Höhe beträgt typischerweise ein Mehrfaches des Durchmessers, beispielsweise das 3fache bis 6fache. Diese Auslegung des Pufferspeichers beruht auf der Überlegung, die (maximale) Strömungsgeschwindigkeit des Wärmeträgermediums innerhalb des Pufferspeichers so einzustellen, dass sie kleiner ist als eine Aufstiegsgeschwindigkeit von enthaltenen Gasblasen. Dadurch wird sichergestellt, dass die Gasblasen zu dem höchsten Punkt gelangen und dort den Pufferspeicher verlassen können.

Allgemein können sich Gasblasen im Erdschwerefeld durch Dichtedifferenz zwischen zwei Phasen oder in einem Strömungsfeld mit Zwangskonvektion bewegen. Maßgeblich für die Funktion der Abscheidung und die Güte der Abscheidung (Abscheidegrad) ist die Reduzierung der Strömungsgeschwindigkeit von derjenigen in der Zuleitung zum Pufferspeicher, die häufig bei ca. 1,5 m/s liegt auf eine kleinere Geschwindigkeit im Pufferspeicher.

In bevorzugter Ausgestaltung ist der Sensor derart angeordnet und ausgebildet, dass er das im Pufferspeicher abgeschiedene gasförmige Kältemittel erfasst. Hierzu ist der Sensor mit dem oberen Bereich des Pufferspeichers verbunden, beispielsweise unmittelbar dort angeordnet. Bevorzugt ist er jedoch in der Entlüftungsleitung angeordnet, misst also den Anteil des Kältemittels innerhalb des Gasstroms, welcher über die Entlüftungsleitung entweicht.

Alternativ zu der Anordnung des Sensors zur Erfassung des im Pufferspeicher abgeschieden Kältemittels kann der Sensor auch an einer anderen Position innerhalb des Verbraucherkreises, beispielsweise im Bereich der Wärmepumpe angeordnet sein. Beispielsweise kann der Sensor auch ein in einem Gasstrom enthaltenes Kältemittel messen, wobei der Gasstrom über einen Mikroluftabscheider oder einen sonstigen Entlüfter entweicht.

Zum Entlüften des Pufferspeichers ist vorzugsweise ein insbesondere automatisches Entlüftungsventil angeordnet, welches speziell nach Art eines sogenannten (Schnell- ) Entlüfters ausgebildet ist. Dieses Entlüftungsventil ist dabei an die Entlüftungsleitung angeschlossen, sodass also das im Pufferspeicher angesammelte Gas über das Entlüftungsventil automatisch in die Entlüftungsleitung entweichen kann. Bei herkömmlichen Entlüftern öffnet das Ventil dabei automatisch, wenn sich am Entlüftungsventil Gas ansammelt.

Der Sensor ist in bevorzugter Ausgestaltung stromab dieses Entlüftungsventils angeordnet und misst daher den Anteil des Kältemittels in dem über die Entlüftungsleitung abgeführten Gasstrom.

**In** zweckdienlicher Ausgestaltung ist die Entlüftungsleitung durch eine Gebäudewandung hindurch in einen Sicherheitsbereich geführt und endet dort. Bei dem Sicherheitsbereich handelt sich dabei insbesondere um einen Außenbereich außerhalb des Gebäudes, in dem der Pufferspeicher angeordnet ist. Hierdurch wird verhindert, dass in dem Raum, in dem der Pufferspeicher angeordnet ist, sich das Kältemittel ansammeln kann.

In bevorzugter Ausgestaltung ist insbesondere zusätzlich zu dem Pufferspeicher und der Entlüftungsleitung im Verbraucherkreis ein Mikro-Gasabscheider angeordnet. Dieser ist unmittelbar in die Verrohrung, beispielsweise in den Vorlauf, speziell unmittelbar an der Wärmepumpe angeordnet. Er wird also im Betrieb von dem Wärmeträgermedium durchströmt. Er weist dabei Einbauten auf, die zum Abtrennen von gasförmigen Bestandteilen aus dem Wärmeträgermedium ausgebildet sind. Bei diesem Mikro-Gasabscheider handelt es sich um an sich bekannte Gasabscheider, wie sie eingangs beschrieben wurden. Bevorzugt ist dieser Mikro-Gasabscheider zwischen der Wärmepumpe und dem Pufferspeicher in der Vorlaufleitung angeordnet.

Der Mikro-Gasabscheider ist bevorzugt in einem Sicherheitsbereich, insbesondere einem Außenbereich außerhalb des Gebäudes angebracht. Innerhalb des Gebäudes ist der restliche Verbraucherkreis angeordnet. Auch hierdurch wird sichergestellt, dass Kältemittel sich nicht im Inneren des Gebäudes anreichern kann. Bei dem Sicherheitsbereich kann es sich auch um eine Halle oder einen sonstigen Betriebsraum handeln, insbesondere wenn dieser beispielsweise ausreichend belüftet ist.

In bevorzugter Ausgestaltung ist die Steuereinrichtung derart ausgebildet, dass als die Sicherheitsmaßnahme die Versorgung des zumindest einen Verbrauchers mit dem Wärmeträgermedium unterbunden wird. Der zumindest eine und vorzugsweise alle Verbraucher wird/werden daher quasi abgeschaltet, sodass das Wärmeträgermedium nicht mehr durch den bzw. die Verbraucher zirkuliert und über den Verbraucher kein Kältemittel beispielsweise über ein am Verbraucher angeordneten Entlüfter entweichen kann.

Der Verbraucherkreis ist unterteilt in einen Primärkreis sowie zumindest einen mit dem Primärkreis verbundenen Sekundärkreis, in dem der zumindest eine Verbraucher eingebunden ist. Sämtliche Verbraucher sind in dem zumindest einen Sekundärkreis angeordnet. Der Primärkreis kann auch als ein Zwischenkreis angesehen werden, welcher zwischen der Wärmepumpe und dem Sekundärkreis angeordnet ist. Der Primärkreis ist daher direkt an der Wärmepumpe angeschlossen. Im Primärkreis ist auch der Pufferspeicher angeordnet.

Sofern von Primärkreis und Sekundärkreis gesprochen wird, so bedeutet dies, dass das Wärmeträgermedium zumindest in einem speziellen Betriebsmodus der Wärmepumpenanlage in dem jeweiligen Kreis zirkulieren kann.

In bevorzugter Ausgestaltung ist der Sekundärkreis von dem Primärkreis über eine steuerbare Absperrarmatur, wie beispielsweise ein Sperrventil oder eine Klappe hydraulisch (ab-)koppelbar und die Steuereinrichtung ist weiterhin derart ausgebildet, dass im Rahmen der Sicherheitsmaßnahme die Absperrarmatur geschlossen wird. Im Normalbetrieb sind Sekundärkreis und Primärkreis hydraulisch miteinander verbunden, d.h. sie werden beide vom Wärmeträgermedium durchströmt.

Alternativ oder ergänzend hierzu ist in dem zumindest einen Sekundärkreis eine sekundäre (Umwälz-) Pumpe angeordnet. Im Rahmen der Sicherheitsmaßnahme wird diese vorzugsweise abgeschaltet. Beide dieser Maßnahmen sorgen dafür, dass das Wärmeträgermedium nicht mehr im Sekundärkreis umgewälzt wird. In einem Normalbetrieb, bei dem also keine Sicherheitsmaßnahme aktiviert ist, ist diese sekundäre Pumpe in Betrieb und vorzugsweise als Hauptpumpe, um das Wärmeträgermedium im Verbraucherkreis umzuwälzen.

Erfindungsgemäß wird im Rahmen der Sicherheitsmaßnahme von einem normalen Betriebsmodus in einen Entgasungsmodus umgeschaltet, bei dem der Anteil des Kältemittels im Wärmeträgermedium reduziert wird, indem das Kältemittel also aus dem Wärmeträgermedium entfernt wird. Das Entfernen geschieht beispielsweise über den als Gasabscheider ausgebildeten Pufferspeicher und/oder mit Hilfe des Mikro-Gasabscheiders.

Im Entgasungsmodus ist dabei ein Umwälzbetrieb vorgesehen, bei dem das Wärmeträgermedium lediglich im Primärkreis und damit ohne Einbindung des/der Verbraucher umgewälzt wird. Dieser Umwälzbetrieb unterstützt dabei die gewünschte Entgasung über den Pufferspeicher und/oder über den Mikro-Gasabscheider. Im Entgasungsmodus wird daher vorzugsweise das Wärmeträgermedium durch den Pufferspeicher geleitet.

Im Primärkreis ist eine primäre Pumpe angeordnet, sodass also sowohl im Primärkreis als auch im Sekundärkreis zumindest jeweils eine Pumpe angeordnet ist. Die primäre Pumpe im Primärkreis ist sowohl im normalen Betriebsmodus als auch im Entgasungsmodus in Betrieb.

In zweckdienlicher Ausgestaltung ist die Steuereinrichtung derart eingerichtet, dass bei Unterschreiten eines unteren Schwellwerts für das vom Sensor erfasste Kältemittel vom Entgasungsmodus wieder in den normalen Betriebsmodus umgeschaltet wird. Dies erfolgt vorzugsweise wiederum in Abhängigkeit des Messergebnisses des Sensors automatisch, ohne dass eine manuelle Aktion von Betriebspersonal erforderlich ist. Alternativ ist ein Umschalten in den normalen Betriebsmodus nur manuell z.B. durch Servicepersonal und beispielsweise nach Behebung einer Störmeldung oder nach einem Serviceeinsatz möglich.

Der Verbraucherkreis weist allgemein eine Vorlaufleitung und eine Rücklaufleitung auf. In zweckdienlicher Ausgestaltung sind diese beiden Leitungen über eine absperrbare Verbindungsleitung hydraulisch miteinander verbindbar. Speziell im Entgasungsmodus und damit im Rahmen der Sicherheitsmaßnahme wird diese hydraulische Verbindung geöffnet, sodass die Vorlaufleitung quasi mit der Rücklaufleitung kurzgeschlossen ist und das Wärmeträgermedium (ausschließlich) im Primärkreis umgewälzt werden kann. Durch diese Verbindungsleitung ist der Primärkreis also ohne den Sekundärkreis geschlossen. Die Verbindungsleitung ist dabei - in Strömungsrichtung im Vorlauf betrachtet - vor dem und damit stromaufwärts des zumindest einen Sekundärkreises angeordnet. Die im Vorlauf angeordnete Absperrarmatur zum Absperren des Sekundärkreislaufs ist nachfolgend und damit stromabwärts zu dem Abzweig der Verbindungsleitung im Vorlauf angeordnet.

Ein Ausführungsbeispiel der Erfindung wird nachfolgend anhand der Figuren näher erläutert. Diese zeigen in teilweise vereinfachten Darstellungen:
- Fig 1: ein Gesamtschaltbild einer Wärmepumpenanlage,
- Fig 2: einen Ausschnitt aus Figur 1 im Bereich eines Pufferspeichers sowie
- Fig 3: einen weiteren Ausschnitt aus Figur 1 zur Erläuterung der Verschaltung zwischen Primärkreis und Sekundärkreis.

In den Figuren sind gleich wirkende Teile mit den gleichen Bezugszeichen versehen.

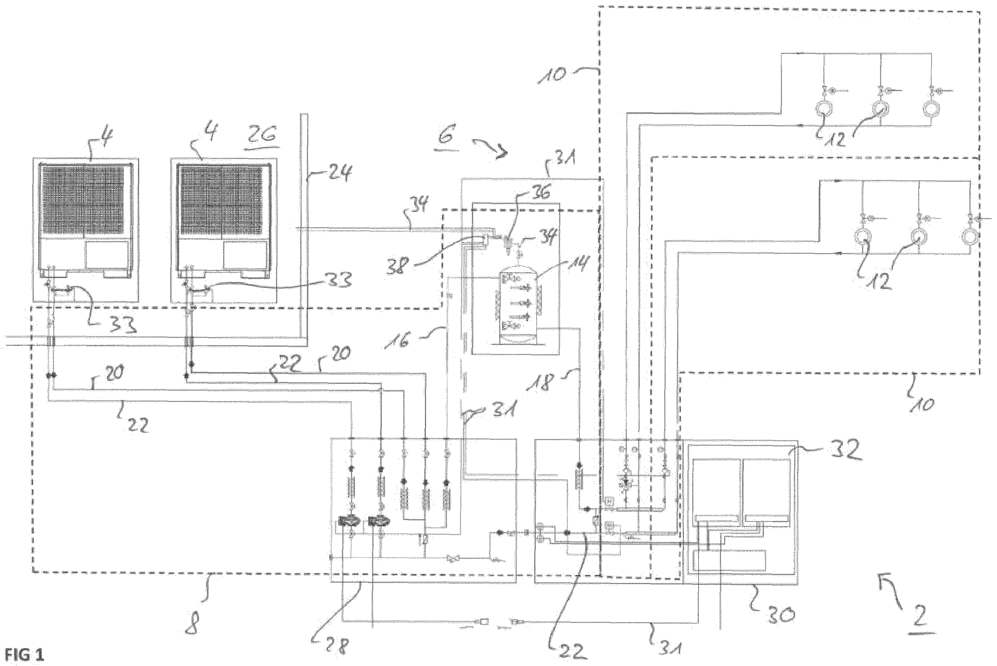

Figur 1 zeigt eine Wärmepumpenanlage 2 mit zumindest einer Wärmepumpe 4, an der ein Verbraucherkreis 6 eingeschlossen ist. Im Ausführungsbeispiel sind zwei Wärmepumpen 4 vorgesehen. Alle nachfolgenden Ausführungen gelten gleichermaßen jedoch auch für andere Varianten mit nur einer Wärmepumpe 4 oder mit mehr als zwei Wärmepumpen 4. Der Verbraucherkreis 6 lässt sich unterteilen in einen Primärkreis 8 und zumindest einen Sekundärkreis 10, vorzugsweise mehrere, im Ausführungsbeispiel zwei Sekundärkreisen 10, die am Primärkreis 8 angeschlossen sind. Ein jeweiliger Sekundärkreis 10 weist jeweils zumindest einen Verbraucher 12 auf. Die Verbraucher 12 dienen jeweils zur Übertragung von Wärme (und/oder Kälte) in einen zu heizenden (zu kühlenden) Raum oder eines Prozesses.

Im Primärkreis 8 ist weiterhin ein Pufferspeicher 14 angeordnet. Diesem wird im Betrieb über eine Zuleitung 16 ein Wärmeträgermedium in einem oberen Bereich zugeführt. Nach Durchströmen des Pufferspeichers 14 verlässt das Wärmeträgermedium diesen in einem unteren Bereich über eine Ableitung 18. Über die Ableitung 18 werden die Sekundärkreise 10 mit dem Wärmeträgermedium versorgt. Der Pufferspeicher 14 ist allgemein in eine Vorlaufleitung 20 geschaltet. Das Wärmeträgermedium fließt über diese von der jeweiligen Wärmepumpe 4 zunächst zum Pufferspeicher 14 und von dort dann in die Sekundärkreise 10 zu den Verbrauchern 12. Über eine Rücklaufleitung 22 wird das Wärmeträgermedium wieder zu den Wärmepumpen 4 zurückgeführt.

Eine jeweilige Wärmepumpe 4 ist jeweils als eine an sich bekannte, herkömmliche Wärmepumpe ausgebildet und weist einen hier nicht näher dargestellten Kältemittelkreis auf. Dieser umfasst wie üblich einen Verdichter, ein Expansionsventil sowie zwei im Betrieb als Kondensator und/oder Verdampfer arbeitende Wärmetauscher. Im Ausführungsbeispiel handelt es sich bei den Wärmepumpen 4 um Luft-Wasser-Wärmepumpen, welche in einer Außenaufstellung mit der Umgebungsluft über den einen Wärmetauscher Wärme/Kälte tauschen. In dem Kältemittelkreis wird ein Kältemittel, insbesondere ein potentiell gefährliches/toxisches Kältemittel, wie beispielsweise Propan im Kreislauf geführt. Über den zweiten Wärmetauscher erfolgt ein Wärme/Kälte-Übertrag auf das Wärmeträgermedium. Die beiden Wärmepumpen 4 sind im Freien, also außerhalb eines Gebäudes 24 und damit in einem Sicherheitsbereich 26 angeordnet. Das Gebäude 24 ist vorliegend lediglich ausschnittsweise durch eine Gebäudewand dargestellt. Bis auf die beiden Wärmepumpen 4 in Außenaufstellung befinden sich sämtliche Komponenten der Wärmepumpenanlage 2 im Inneren des Gebäudes 24.

Bei dem Gebäude 24 handelt es sich beispielsweise um ein Wohngebäude, ein Bürogebäude usw. Die Wärmepumpenanlage 2 dient allgemein insbesondere zum Beheizen/Kühlen des Gebäudes 24.

Die Wärmepumpenanlage 2 weist im Ausführungsbeispiel ein erstes Hydraulikmodul 28 sowie ein zweites Hydraulikmodul 30 auf. In diesen sind jeweils verschiedene Einheiten wie Pumpen, Ventile angeordnet, über die das Umwälzen des Wärmeträgermediums im Verbraucherkreis 6 gesteuert wird.

Der Betrieb der Wärmepumpenanlage 2 wird weiterhin über eine Steuereinrichtung 32 gesteuert. Diese ist mit den einzelnen Komponenten über Steuerleitungen 31 und bei Bedarf über drahtlose Kommunikationsverbindungen verbunden.

Im Betrieb der Wärmepumpenanlage 2 besteht die Gefahr, dass Kältemittel beispielsweise durch Leckagen innerhalb des zweiten Wärmetauschers der Wärmepumpe 4 in das Wärmeträgermedium des Verbraucherkreises 6 gelangt. Um eine eventuell gefährliche Ansammlung des Kältemittels beispielsweise in Räumen zu vermeiden und damit eine Explosionsgefahr zu vermeiden, sind spezielle Maßnahmen getroffen. Durch diese wird insbesondere das Kältemittel gezielt aus dem Wärmeträgermedium entfernt und insbesondere in nicht kritische Bereiche abgeleitet.

Eine wesentliche Funktion hat hierbei der Pufferspeicher 14, welcher nach Art eines Gasabscheiders betrieben wird. Ergänzend sind im Ausführungsbeispiel Mikro-Gasabscheider 33 angeordnet, die insbesondere unmittelbar nachfolgend zu einer jeweiligen Wärmepumpe 4 in den Vorlauf geschaltet sind. Über die Mikro-Gasabscheider 33 erfolgt bereits eine Abscheidung von im Wärmeträgermedium enthaltenen Gasanteilen. Die Mikro-Gasabscheider 33 sind dabei im Sicherheitsbereich 26, also insbesondere im Außenbereich angeordnet, sodass das über sie ausgeleitete Gas in die Umgebung austritt.

Innerhalb des Gebäudes 24 sind in bevorzugter Ausgestaltung zumindest im gesamten Primärkreis 8 keine Entlüftungsventile oder sonstigen Ventile / Entlüfter angeordnet, über die Gas und damit Kältemittel aus dem Verbraucherkreis 6 austreten und in das Gebäude gelangen könnte. Sämtliche evtl. vorhandene Entlüftungsventile geben das Gas in den Sicherheitsbereich 26 ab. An den Verbrauchern 12 sind demgegenüber beispielsweise (automatische) Entlüfter angeordnet. Der Primärkreislauf 10 ist üblicherweise durch zumindest ein Sicherheitsventil gegen Drucküberschreitung abgesichert. Dieses befindet sich im Sicherheitsbereich 26 oder entlüftet dorthin.

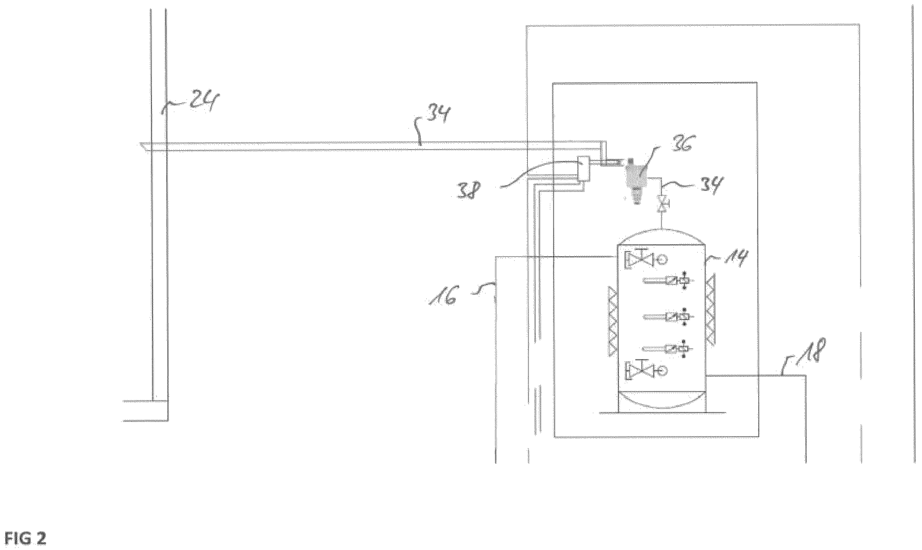

Wie aus Figur 1 und insbesondere aus der vergrößerten Darstellung der Figur 2 hervorgeht, ist am obersten Punkt des Pufferspeichers 14 eine Entlüftungsleitung 34 angeschlossen. In den Figuren ist unmittelbar nachfolgend zum obersten Punkt des Pufferspeichers 14 zunächst ein Absperrventil dargestellt, welches jedoch nicht zwingend erforderlich ist. Nachfolgend hierzu ist ein Entlüftungsventil 36 in die Entlüftungsleitung 34 geschaltet. Dieses öffnet automatisch, wenn im oberen Bereich des Pufferspeichers 14 Gas anliegt, sodass dieses über die Entlüftungsleitung 34 abgeführt werden kann. Das Entlüftungsventil 36 könnte prinzipiell auch unmittelbar am obersten Punkt des Pufferspeichers 14 eingebaut sein. Wichtig ist, dass das Gas vom Entlüftungsventil 36 in die Entlüftungsleitung 34 abgegeben wird. Die Entlüftungsleitung 34 führt dabei insbesondere in den Sicherheitsbereich 26, also speziell nach außen, sodass das Gas nach außen abgegeben wird.

In die Entlüftungsleitung 34 ist weiterhin ein (Gas-) Sensor 38 geschaltet, welcher zur Detektion des eventuell vorhandenen (gasförmigen) Kältemittels ausgebildet ist.

Im Ausführungsbeispiel sind am Pufferspeicher 14 durch Symbole mehrere Komponenten dargestellt, nämlich Absperrventile, die zum Absperren der Zulaufleitung 16 bzw. der Ablaufleitung 18 dienen, sowie im Ausführungsbeispiel weiterhin elektrische Heizstäbe, die bei Bedarf als Zusatzheizung zugeschaltet werden. Weiterhin ist eine Isolierung angedeutet, die den Pufferspeicher 14 regelmäßig umgibt.

Der Pufferspeicher 14 ist derart ausgebildet, dass er als ein Gasabscheider wirkt. Hierzu ist er derart ausgelegt, dass eine maximale Strömungsgeschwindigkeit des von oben nach unten strömenden Wärmeträgermediums einen vorgegebenen Wert, der insbesondere zwischen 0,1-0,3 m/s liegt, nicht überschreitet. Dieser Wert ist so gewählt, dass eine Aufstiegsgeschwindigkeit von Blasen, die im Wärmeträgermedium enthalten sind, größer ist als die Strömungsgeschwindigkeit des Wärmeträgermediums, sodass also die Blasen in den oberen Bereich des Pufferspeichers 14 wandern und dort über die Entlüftungsleitung 34 diesen veranlassen können.

Wird vom Sensor 38 Kältemittel detektiert, bzw. ein kritischer Wert für das Kältemittel detektiert, d.h. wenn also der Messwert einen Schwellwert überschreitet, so wird allgemein eine Sicherheitsmaßnahme eingeleitet.

Grundsätzlich wird hierzu der vom Sensor 38 erfasste Messwert ausgewertet und es werden geeignete Komponenten angesteuert. Die Auswertung und Ansteuerung können dabei bereits im Sensor 38 integriert sein, dieser ist in diesem Fall daher als eine kombinierte Sensor- und Steuereinheit ausgebildet. Alternativ wird der Messwert an eine separate Steuereinheit, beispielsweise die Steuereinrichtung 32 übermittelt, die dann die entsprechenden Maßnahmen veranlasst.

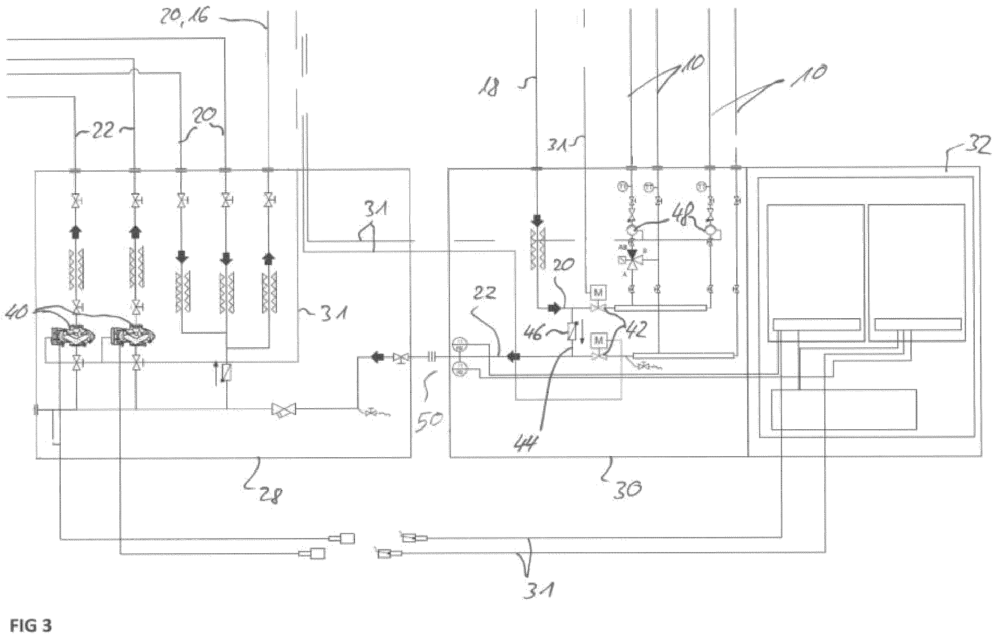

Die eingeleiteten Sicherheitsmaßnahmen werden im Zusammenhang mit der Figur 1 und insbesondere anhand der vergrößerten Darstellung gemäß der Figur 3 näher erläutert:
In der Figur 3 ist zunächst zu erkennen, dass das erste Hydraulikmodul 28 an die von den Wärmepumpen 4 kommenden Vorlaufleitungen 20 sowie Rücklaufleitungen 22 angeschlossen sind. Die Vorlaufleitungen 20 werden miteinander verbunden und münden in die Zuleitung 16. Im ersten Hydraulikmodul 28 ist im Ausführungsbeispiel für jede Wärmepumpe 4 eine primäre Pumpe 40 angeordnet, die im Ausführungsbeispiel in der Rücklaufleitung 22 der jeweiligen Wärmepumpe 4 geschaltet sind. Die Fließrichtung des Wärmeträgermedium ist in den Figuren jeweils durch Pfeile angedeutet.

Das zweite Hydraulikmodul 30 ist zunächst eingangsseitig an die Ableitung 18 (kommend vom Pufferspeicher) angeschlossen. An diese schließen sich die beiden Sekundärkreise 10 an, d. h. ein jeweiliger Vorlauf des jeweiligen Sekundärkreises 10 zweigt ab. Zwischen der Ableitung 18 und den Sekundärkreisen 10, also zwischen dem Primärkreis 8 und den Sekundärkreisen 10 ist im Vorlauf ein motorisch angetriebene und steuerbare Absperrarmatur 42 angeordnet. Die beiden Sekundärkreise 10 weisen jeweils einen Rücklauf auf, welcher mit der Rücklaufleitung 22 des Primärkreises 8 verbunden ist. Auch in diesem Rücklauf ist ebenfalls eine Absperrarmatur 42 angeordnet.

Auf Seite des Primärkreises 8 ist die Vorlaufleitung 20 über eine Verbindungsleitung 44 mit der Rücklaufleitung 22 strömungstechnisch verbunden. In die Verbindungsleitung 44 ist dabei eine weitere Absperrarmatur, insbesondere in Form einer Rückschlagarmatur 46 angeordnet.

In jedem Sekundärkreis 10 ist weiterhin im jeweiligen Vorlauf eine sekundäre Pumpe 48 angeordnet, die zur Umwälzung des Wärmeträgermediums im jeweiligen Sekundärkreis 10 dient.

Die Rücklaufleitung 22 verbindet die beiden Hydraulikmodule 28,30, wobei hierzu speziell eine lösbare Verbindung 50 vorgesehen ist. Zur Ansteuerung der primären Pumpen 40 ist eine der Steuerleitungen 31 von der Steuereinrichtung 32 zu dem ersten Hydraulikmodul 28 geführt, welche ebenfalls über lösbare Steckverbindung trennbar ist.

Im Falle der Detektion eines unzulässigen Wertes für das Kältemittel in der Entlüftungsleitung 34 (Figur 2) werden vorzugsweise folgende Maßnahmen ergriffen:
Allgemein wird das Umwälzen des Wärmeträgermediums in den Sekundärkreisen 10 unterbunden, sodass also kein Kältemittel in die einzelnen Räume beispielsweise über die an den Verbrauchern 12 häufig angeordneten Entlüfter austreten kann. Hierzu werden insbesondere die beiden Absperrarmaturen 42 geschlossen und zugleich werden auch die sekundären Pumpen 48 abgeschaltet. Damit sind die sekundären Kreise 10 von dem restlichen Verbraucherkreis 6 und speziell vom Primärkreis 8 getrennt.

Um den Anteil des Kältemittels im Verbraucherkreis 6 zu reduzieren ist weiterhin ein Entgasungsmodus vorgesehen, bei dem der Anteil des Kältemittels im Wärmeträgermedium reduziert wird. Hierzu ist insbesondere ein Umwälzbetrieb des Wärmeträgermedium im Primärkreis 8 vorgesehen. Hierzu wird die weitere Absperrarmatur 46 geöffnet, bzw. die weitere Absperrarmatur 46 (Rückschlagventil) öffnet automatisch, sodass das Wärmeträgermedium im Primärkreis 8 unter Abkopplung der sekundären Kreise 10 zirkulieren kann. Das Wärmeträgermedium wird dabei mithilfe der primären Pumpen 40 umgewälzt.

Durch den Umwälzbetrieb wird daher der Pufferspeicher 14 weiterhin gemäß einer ersten Variante in seiner Eigenschaft als Gasabscheider betrieben, sodass im Wärmeträgermedium enthaltenes Gas und damit auch das gasförmige Kältemittel austreten kann. Über den Pufferspeicher 14 werden insbesondere Gasanteile abgeschieden, welche über die ergänzend vorgesehenen Mikro-Gasabscheider 33 nicht abgeschieden werden. Alternativ wird die Entlüftungsleitung 34 verschlossen und die Entfernung des gasförmigen Kältemittels erfolgt über den Mikro-Gasabscheider 33.

Durch das hier beschriebene Sicherheitskonzept ist daher ein kritisches Entweichen von brennbaren Kältemittel vermieden. Dies erfolgt insbesondere dadurch, dass im Falle einer Leckage in den Wärmetauschern das in den Verbraucherkreis 6 eingedrungene Kältemittel kontrolliert im Pufferspeicher 14 gesammelt und sicher abführt wird. Die verbesserte Sicherheit ist dabei im Vergleich zu herkömmlichen Anlagen erreicht durch den (zusätzlichen) Einbau von Sicherheitskomponenten sowie durch eine Veränderung des Steuer- und Regelungskonzepts.

### Bezugszeichenliste

- 2: Wärmepumpenanlage
- 4: Wärmepumpe
- 6: Verbraucherkreis
- 8: Primärkreis
- 10: Sekundärkreis
- 12: Verbraucher
- 14: Pufferspeicher
- 16: Zuleitung
- 18: Ableitung
- 20: Vorlaufleitung
- 22: Rücklaufleitung
- 24: Gebäude
- 26: Sicherheitsbereich
- 28: erstes Hydraulikmodul
- 30: zweites Hydraulikmodul
- 31: Steuerleitung
- 32: Steuereinrichtung
- 33: Mikro Gasabscheider
- 34: Entlüftungsleitung
- 36: Entlüftungsventil
- 38: Sensor
- 40: primäre Pumpe
- 42: Absperrarmatur
- 44: Verbindungsleitung
- 46: weitere Absperrarmatur
- 48: sekundäre Pumpe
- 50: lösbare Verbindung

## Patentansprüche

1. Wärmepumpenanlage (2) mit
- einer Wärmepumpe (4) mit einem im Betrieb von einem Kältemittel durchströmten Kältemittelkreis,
- zumindest einem an der Wärmepumpe (4) angeschlossenen Verbraucherkreis (6), der von einem Wärmeträgermedium durchströmt ist und der zumindest einen Verbraucher (12) aufweist,
- einem im Verbraucherkreis (6) angeordneten Pufferspeicher (14), der zulaufseitig über eine Zuleitung (16) mit der Wärmepumpe (4) und ablaufseitig über eine Ableitung (18) mit dem zumindest einen Verbraucher (12) verbunden ist, wobei der Pufferspeicher (14) als Gasabscheider ausgebildet ist und an eine Entlüftungsleitung (34) angeschlossen ist, wobei der Pufferspeicher im Betrieb von dem Wärmeträgermedium durchströmt wird und derart ausgebildet ist, dass im Betrieb Gasblasen aufsteigen und den Pufferspeicher (14) über die Entlüftungsleitung verlassen können,
- wobei der Verbraucherkreis (6) unterteilt ist in einen Primärkreis (8) sowie zumindest einen mit dem Primärkreis (8) verbundenen Sekundärkreis (10), in dem der zumindest eine Verbraucher (12) eingebunden ist, wobei sämtliche Verbraucher (12) in dem zumindest einen Sekundärkreis (10) angeordnet sind und der Primärkreis (8) zwischen der Wärmepumpe (4) und dem Sekundärkreis (10) angeordnet ist,
- einer Steuereinrichtung (32) sowie
- einem im Verbraucherkreis (6) angeordneten Sensor (38) zur Erfassung von gasförmigem Kältemittel, wobei
- die Steuereinrichtung (32) derart ausgelegt ist, dass bei Überschreiten eines oberen Schwellwertes für das Kältemittel insbesondere automatisch eine Sicherheitsmaßnahme eingeleitet wird wobei
- im Rahmen der Sicherheitsmaßnahme von einem normalen Betriebsmodus in einen Entgasungsmodus umgeschaltet wird,
- in dem Entgasungsmodus der Anteil des Kältemittels im Wärmeträgermedium reduziert wird,
- im Entgasungsmodus ein Umwälzbetrieb erfolgt, bei dem das Wärmeträgermedium lediglich im Primärkreis (8) umgewälzt wird,
- der Pufferspeicher (14) Teil des Primärkreises (8) ist und das Wärmeträgermedium im Entgasungsmodus und im Umwälzbetrieb durch den Pufferspeicher (14) strömt,
- im Primärkreis (8) eine primäre Pumpe (40) angeordnet ist, die im Entgasungsmodus eingeschaltet ist.

2. Wärmepumpenanlage (2) nach dem vorhergehenden Anspruch, bei der der Pufferspeicher (14) im Betrieb von oben nach unten von dem Wärmeträgermedium durchströmt wird und der Pufferspeicher (14) derart ausgelegt ist, dass im Betrieb eine Strömungsgeschwindigkeit des Wärmeträgermediums einen vorgegebenen Grenzwert im Bereich von 0,1 m/s bis 0,3 m/s nicht überschreitet.

3. Wärmepumpenanlage (2) nach einem der beiden vorhergehenden Ansprüche, bei der der Sensor (38) zur Erfassung von im Pufferspeicher (14) abgeschiedenen Kältemittel ausgebildet ist.

4. Wärmepumpenanlage (2) nach einem der vorhergehenden Ansprüche , bei der zum Entlüften des Pufferspeichers (14) ein insbesondere automatisches Entlüftungsventil (36) angeordnet ist, welches an die Entlüftungsleitung (34) angeschlossen ist, wobei der Sensor (38) vorzugsweise stromab des Entlüftungsventils (36) angeordnet ist.

5. Wärmepumpenanlage (2) nach einem der vorhergehenden Ansprüche, bei der der Pufferspeicher (14) in einem Gebäude (24) angeordnet ist und die Entlüftungsleitung (34) in einem Sicherheitsbereich (26) endet und insbesondere aus dem Gebäude (24) nach außen geführt ist.

6. Wärmepumpenanlage (2) nach einem der vorhergehenden Ansprüche, bei der im Verbraucherkreis (6) ein Mikro-Gasabscheider (33) angeordnet ist, welcher im Betrieb von dem Wärmeträgermedium durchströmt wird und der zum Abtrennen gasförmiger Bestandteile aus dem Wärmeträgermedium ausgebildet ist, wobei der Mikro-Gasabscheider (33) vorzugsweise in einem Sicherheitsbereich (26) insbesondere außerhalb eines Gebäudes (24) angebracht ist.

7. Wärmepumpenanlage (2) nach einem der vorhergehenden Ansprüche, bei der die Steuereinrichtung (32) derart ausgebildet ist, dass als Sicherheitsmaßnahme die Versorgung des zumindest einen Verbrauchers (12) mit dem Wärmeträgermedium unterbunden wird.

8. Wärmepumpenanlage (2) nach einem der vorhergehenden Ansprüche, bei der der Verbraucherkreis (6) einen an der Wärmepumpe (4) angeschlossenen Primärkreis (8) sowie zumindest einen mit dem Primärkreis (8) verbundenen Sekundärkreis (10) mit dem zumindest einen Verbraucher (12) aufweist, wobei der Sekundärkreis (10) von dem Primärkreis (8) über eine steuerbare Absperrarmatur (42) hydraulisch abkoppelbar ist und die Steuereinrichtung (32) derart ausgebildet ist, dass im Rahmen der Sicherheitsmaßnahme die Absperrarmatur (42) geschlossen wird.

9. Wärmepumpenanlage (2) nach einem der vorhergehenden Ansprüche, bei der der Verbraucherkreis (6) einen an der Wärmepumpe (4) angeschlossenen Primärkreis (8) sowie zumindest einen mit dem Primärkreis (8) verbundenen Sekundärkreis (10) mit dem zumindest einen Verbraucher (12) aufweist, wobei im zumindest einen Sekundärkreis (10) eine sekundäre Pumpe (48) angeordnet ist, und die Steuereinrichtung (32) derart ausgebildet ist, dass im Rahmen der Sicherheitsmaßnahme die sekundäre Pumpe (48) abgeschaltet wird.

10. Wärmepumpenanlage (2) nach einem der vorhergehenden Ansprüche , bei der die im Primärkreis (8) angeordnete primäre Pumpe (40) lediglich im Entgasungsmodus eingeschaltet ist.

11. Wärmepumpenanlage (2) nach einem der vorhergehenden Ansprüche, bei der der Verbraucherkreis (6) eine Vorlaufleitung (20) und eine Rücklaufleitung (22) aufweist, die über eine absperrbare Verbindungsleitung (44) hydraulisch miteinander verbindbar sind.

12. Verfahren zum Betrieb einer Wärmepumpenanlage (2), die aufweist
- eine Wärmepumpe (4) mit einem von einem Kältemittel durchströmten Kältemittelkreis,
- zumindest ein an der Wärmepumpe (4) angeschlossenen Verbraucherkreis (6), der von einem Wärmeträgermedium durchströmt wird und der zumindest einen Verbraucher (12) aufweist,
- einen im Verbraucherkreis (6) angeordneten Pufferspeicher (14), der zulaufseitig über eine Zuleitung (16) mit der Wärmepumpe (4) und ablaufseitig über eine Ableitung (18) mit dem zumindest einen Verbraucher (12) verbunden ist, wobei der Pufferspeicher (14) als Gasabscheider ausgebildet ist und an eine Entlüftungsleitung (34) angeschlossen ist, wobei der Pufferspeicher von dem Wärmeträgermedium durchströmt wird und derart ausgebildet ist, dass vorhandene Gasblasen aufsteigen und den Pufferspeicher (14) über die Entlüftungsleitung verlassen können
- einen im Verbraucherkreis (6) angeordneten Sensor (38) zur Erfassung von gasförmigem Kältemittel, wobei bei Überschreiten eines oberen Schwellwertes für das Kältemittel automatisch eine Sicherheitsmaßnahme eingeleitet wird, wobei
- im Rahmen der Sicherheitsmaßnahme von einem normalen Betriebsmodus in einen Entgasungsmodus umgeschaltet wird,
- in dem Entgasungsmodus der Anteil des Kältemittels im Wärmeträgermedium reduziert wird,
- im Entgasungsmodus ein Umwälzbetrieb erfolgt, bei dem das Wärmeträgermedium lediglich im Primärkreis (8) umgewälzt wird,
- der Pufferspeicher (14) Teil des Primärkreises (8) ist und das Wärmeträgermedium im Entgasungsmodus und im Umwälzbetrieb durch den Pufferspeicher (14) strömt,
- im Primärkreis (8) eine primäre Pumpe (40) angeordnet ist, die im Entgasungsmodus eingeschaltet ist.

## Claims

1. Heat-pump installation (2) having
- a heat pump (4) with a refrigerant circuit which is flowed through by a refrigerant during operation,
- at least one consumer circuit (6) which is connected to the heat pump (4) and is flowed through by a heat-carrier medium and has at least one consumer (12),
- a buffer store (14) which is arranged in the consumer circuit (6) and is connected at the inflow side to the heat pump (4) via a feed line (16) and is connected at the outflow side to the at least one consumer (12) via a discharge line (18), wherein the buffer store (14) is in the form of a gas separator and is connected to a venting line (34), wherein the buffer store is flowed through by the heat-carrier medium during operation and is designed in such a way that, during operation, gas bubbles are able to rise and are able to exit the buffer store (14) via the venting line,
- wherein the consumer circuit (6) is subdivided into a primary circuit (8) and at least one secondary circuit (10), which is connected to the primary circuit (8) and in which the at least consumer (12) is incorporated, wherein all the consumers (12) are arranged in the at least one secondary circuit (10) and the primary circuit (8) is arranged between the heat pump (4) and the secondary circuit (10),
a control device (32), and
- a sensor (38) which is arranged in the consumer circuit (6) and serves for detecting gaseous refrigerant, wherein
- the control device (32) is configured in such a way that, in the event of an upper threshold value for the refrigerant being exceeded, a safety measure is initiated, in particular automatically, wherein,
- in the course of the safety measure, there is a switch from a normal operating mode into a degasification mode,
- in the degasification mode, the fraction of the refrigerant in the heat-carrier medium is reduced,
- in the degasification mode, a circulation operation in which the heat-carrier medium is circulated solely in the primary circuit (8) takes place,
- the buffer store (14) is part of the primary circuit (8) and, in the degasification mode and during circulation operation, the heat-carrier medium flows through the buffer store (14),
- in the primary circuit (8), there is arranged a primary pump (40) which is in a switched-on state in the degasification mode.

2. Heat-pump installation (2) according to the preceding claim, in which the buffer store (14) is flowed through by the heat-carrier medium from the top downwards during operation, and the buffer store (14) is configured in such a way that, during operation, a flow speed of the heat-carrier medium does not exceed a predefined limit value in the range from 0.1 m/s to 0.3 m/s.

3. Heat-pump installation (2) according to either of the two preceding claims, in which the sensor (38) is configured for detecting refrigerant separated out in the buffer store (14).

4. Heat-pump installation (2) according to one of the preceding claims, in which, for the purpose of venting the buffer store (14), there is arranged an in particular automatic venting valve (36) which is connected to the venting line (34), wherein the sensor (38) is preferably arranged downstream of the venting valve (36).

5. Heat-pump installation (2) according to one of the preceding claims, in which the buffer store (14) is arranged in a building (24) and the venting line (34) ends in a safety area (26) and is in particular led out of the building (24) to the outside.

6. Heat-pump installation (2) according to one of the preceding claims, in which, in the consumer circuit (6), there is arranged a micro-gas separator (33) which is flowed through by the heat-carrier medium during operation and which is configured for separating gaseous constituents out of the heat-carrier medium, wherein the micro-gas separator (33) is preferably provided in a safety area (26) in particular outside a building (24).

7. Heat-pump installation (2) according to one of the preceding claims, in which the control device (32) is configured in such a way that, as a safety measure, supply of the heat-carrier medium to the at least one consumer (12) is prevented.

8. Heat-pump installation (2) according to one of the preceding claims, in which the consumer circuit (6) has a primary circuit (8), which is connected to the heat pump (4), and at least one secondary circuit (10), which is connected to the primary circuit (8) and has the at least one consumer (12), wherein the secondary circuit (10) is able to be decoupled hydraulically from the primary circuit (8) via a controllable shut-off fitting (42) and the control device (32) is configured in such a way that the shut-off fitting (42) is closed in the course of the safety measure.

9. Heat-pump installation (2) according to one of the preceding claims, in which the consumer circuit (6) has a primary circuit (8), which is connected to the heat pump (4), and at least one secondary circuit (10), which is connected to the primary circuit (8) and has the at least one consumer (12), wherein a secondary pump (48) is arranged in the at least one secondary circuit (10), and the control device (32) is configured in such a way that the secondary pump (48) is switched off in the course of the safety measure.

10. Heat-pump installation (2) according to one of the preceding claims, in which the primary pump (40) arranged in the primary circuit (8) is in a switched-on state solely in the degasification mode.

11. Heat-pump installation (2) according to one of the preceding claims, in which the consumer circuit (6) has a supply line (20) and a return line (22) which are able to be connected to one another hydraulically via a connecting line (44) which is able to be shut off.

12. Method for operating a heat-pump installation (2) having
- a heat pump (4) with a refrigerant circuit which is flowed through by a refrigerant,
- at least one consumer circuit (6) which is connected to the heat pump (4) and is flowed through by a heat-carrier medium and has at least one consumer (12),
- a buffer store (14) which is arranged in the consumer circuit (6) and is connected at the inflow side to the heat pump (4) via a feed line (16) and is connected at the outflow side to the at least one consumer (12) via a discharge line (18), wherein the buffer store (14) is in the form of a gas separator and is connected to a venting line (34), wherein the buffer store is flowed through by the heat-carrier medium and is designed in such a way that gas bubbles present are able to rise and are able to exit the buffer store (14) via the venting line,
- a sensor (38) which is arranged in the consumer circuit (6) and serves for detecting gaseous refrigerant, wherein, in the event of an upper threshold value for the refrigerant being exceeded, a safety measure is initiated automatically, wherein
- in the course of the safety measure, there is a switch from a normal operating mode into a degasification mode,
- in the degasification mode, the fraction of the refrigerant in the heat-carrier medium is reduced,
- in the degasification mode, a circulation operation in which the heat-carrier medium is circulated solely in the primary circuit (8) takes place,
- the buffer store (14) is part of the primary circuit (8) and, in the degasification mode and during circulation operation, the heat-carrier medium flows through the buffer store (14),
- in the primary circuit (8), there is arranged a primary pump (40) which is in a switched-on state in the degasification mode.

## Revendications

1. Installation (2) de pompe à chaleur avec
- une pompe à chaleur (4) avec un circuit frigorifique pouvant être traversé en fonctionnement par un fluide frigorigène,
- au moins un circuit consommateur (6) raccordé à la pompe à chaleur (4), qui est traversé par un milieu caloporteur et qui comporte au moins un consommateur (12),
- un accumulateur tampon (14) disposé dans le circuit consommateur (6), qui est relié côté entrée à la pompe à chaleur (4) par une conduite d'arrivée (16) et côté sortie à l'au moins un consommateur (12) par une conduite de sortie (18), l'accumulateur tampon (14) étant réalisé comme un séparateur de gaz et étant raccordé à une conduite de purge d'air (34), l'accumulateur tampon étant traversé en fonctionnement par le milieu caloporteur et étant réalisé de telle manière qu'en fonctionnement des bulles de gaz remontent et peuvent quitter l'accumulateur tampon (14) par la conduite de purge d'air,
- le circuit consommateur (6) étant divisé en un circuit primaire (8) ainsi qu'au moins en un circuit secondaire (10) relié au circuit primaire (8), dans lequel l'au moins un consommateur (12) est intégré, la totalité des consommateurs (12) étant disposés dans l'au moins un circuit secondaire (10) et le circuit primaire (8) étant disposé entre la pompe à chaleur (4) et le circuit secondaire (10),
- un dispositif de commande (32) ainsi
- qu'un capteur (38) disposé dans le circuit consommateur (6), destiné à détecter un fluide frigorigène gazeux,
- le dispositif de commande (32) étant conçu de telle manière qu'en cas de dépassement d'une valeur de seuil supérieure pour le fluide frigorigène, une mesure de sécurité est prise en particulier automatiquement,
- un passage d'un mode de fonctionnement normal dans un mode de dégazage étant effectué dans le cadre de la mesure de sécurité,
- la proportion du fluide frigorigène dans le milieu caloporteur étant réduite dans le mode de dégazage,
- un fonctionnement de remise en circulation étant effectué dans le mode de dégazage, dans lequel le milieu caloporteur est remis en circulation seulement dans le circuit primaire (8),
- l'accumulateur tampon (14) faisant partie du circuit primaire (8) et le milieu caloporteur circulant à travers l'accumulateur tampon (14) dans le mode de dégazage et dans le fonctionnement de remise en circulation,
- une pompe primaire (40), qui est activée dans le mode de dégazage, étant disposée dans le circuit primaire (8).

2. Installation (2) de pompe à chaleur selon la revendication précédente, dans laquelle **l'accumulateur** tampon (14) est traversé en fonctionnement du haut vers le bas par le milieu caloporteur et l'accumulateur tampon (14) est conçu de telle manière qu'en fonctionnement une vitesse d'écoulement du milieu caloporteur ne dépasse pas une valeur limite prédéfinie dans la plage de 0,1 m/s à 0,3 m/s.

3. Installation (2) de pompe à chaleur selon l'une des deux revendications précédentes, dans laquelle le capteur (38) est réalisé pour détecter du fluide frigorigène séparé dans l'accumulateur tampon (14).

4. Installation (2) de pompe à chaleur selon l'une des revendications précédentes, dans laquelle pour évacuer l'air de l'accumulateur tampon (14), une soupape de purge d'air (36) en particulier automatique est disposée, laquelle est raccordée à la conduite de purge d'air (34), le capteur (38) étant disposé de préférence en aval de la soupape de purge d'air (36).

5. Installation (2) de pompe à chaleur selon l'une des revendications précédentes, dans laquelle l'accumulateur tampon (14) est disposé dans un bâtiment (24) et la conduite de purge d'air (34) se termine dans une zone de sécurité (26) et est guidée en particulier vers l'extérieur hors du bâtiment (24).

6. Installation (2) de pompe à chaleur selon l'une des revendications précédentes, dans laquelle est disposé dans le circuit consommateur (6) un microséparateur de gaz (33), qui est traversé en fonctionnement par le milieu caloporteur et qui est réalisé pour séparer des composants gazeux du milieu caloporteur, le microséparateur de gaz (33) étant installé de préférence dans une zone de sécurité (26) en particulier l'extérieur d'un bâtiment (24).

7. Installation (2) de pompe à chaleur selon l'une des revendications précédentes, dans laquelle le dispositif de commande (32) est réalisé de telle manière que l'alimentation de l'au moins un consommateur (12) en milieu caloporteur est coupée en tant que mesure de sécurité.

8. Installation (2) de pompe à chaleur selon l'une des revendications précédentes, dans laquelle le circuit consommateur (6) comporte un circuit primaire (8) raccordé à la pompe à chaleur (4) ainsi qu'au moins un circuit secondaire (10), relié au circuit primaire (8), avec l'au moins un consommateur (12), le circuit secondaire (10) pouvant être découplé hydrauliquement du circuit primaire (8) par un robinet d'arrêt (42) et le dispositif de commande (32) étant réalisé de telle manière que le robinet d'arrêt (42) est fermé dans le cadre de la mesure de sécurité.

9. Installation (2) de pompe à chaleur selon l'une des revendications précédentes, dans laquelle le circuit consommateur (6) comporte un circuit primaire (8) raccordé à la pompe à chaleur (4) ainsi qu'au moins un circuit secondaire (10), relié au circuit primaire (8), avec l'au moins un consommateur (12), une pompe secondaire (48) étant disposée dans l'au moins un circuit secondaire (10) et le dispositif de commande (32) étant réalisé de telle manière que la pompe secondaire (48) est désactivée dans le cadre de la mesure de sécurité.

10. Installation (2) de pompe à chaleur selon l'une des revendications précédentes, dans laquelle la pompe primaire (40) disposée dans le circuit primaire (8) est activée seulement dans le mode de dégazage.

11. Installation (2) de pompe à chaleur selon l'une des revendications précédentes, dans laquelle le circuit consommateur (6) comporte une conduite d'alimentation (20) et une conduite de retour (22), qui peuvent être reliées l'une à l'autre hydrauliquement par une conduite de liaison (44) pouvant être obturée.

12. Procédé destiné à faire fonctionner une installation (2) de pompe à chaleur qui comporte
- une pompe à chaleur (4) avec un circuit frigorifique pouvant être traversé par un fluide frigorigène,
- au moins un circuit consommateur (6) raccordé à la pompe à chaleur (4), qui est traversé par un milieu caloporteur et qui comporte au moins un consommateur (12),
- un accumulateur tampon (14) disposé dans le circuit consommateur (6), qui est relié côté entrée à la pompe à chaleur (4) par une conduite d'arrivée (16) et côté sortie à l'au moins un consommateur (12) par une conduite de sortie (18), l'accumulateur tampon (14) étant réalisé comme un séparateur de gaz et étant raccordé à une conduite de purge d'air (34), l'accumulateur tampon étant traversé par le milieu caloporteur et étant réalisé de telle manière que des bulles de gaz présentes remontent et peuvent quitter l'accumulateur tampon (14) par la conduite de purge d'air
- un capteur (38) disposé dans le circuit consommateur (6), destiné à détecter un fluide frigorigène gazeux, une mesure de sécurité étant prise automatiquement en cas de dépassement d'une valeur de seuil supérieure,
- un passage d'un mode de fonctionnement normal dans un mode de dégazage étant effectué dans le cadre de la mesure de sécurité,
- la proportion du fluide frigorigène dans le milieu caloporteur étant réduite dans le mode de dégazage,
- un fonctionnement de remise en circulation étant effectué dans le mode de dégazage, dans lequel le milieu caloporteur est remis en circulation seulement dans le circuit primaire (8),
- l'accumulateur tampon (14) faisant partie du circuit primaire (8) et le milieu caloporteur circulant à travers l'accumulateur tampon (14) dans le mode de dégazage et dans le fonctionnement de remise en circulation,
- une pompe primaire (40), qui est activée dans le mode de dégazage, étant disposée dans le circuit primaire (8) .
